# EUROPÄISCHE PATENTSCHRIFT

(11) **EP 4 650 632 B1**
(45) Veröffentlichungstag und Bekanntmachung des Hinweises auf die Patenterteilung: **17.06.2026**
(21) Anmeldenummer: 24176072.7
(22) Anmeldetag: 15.05.2024
(51) Int. Cl.: F16K 11/074, F16K 27/04

(54) **MISCHVENTILKARTUSCHE**
MIXING VALVE CARTRIDGE
CARTOUCHE DE ROBINET MITIGEUR

(43) Veröffentlichungstag der Anmeldung: 19.11.2025
(73) Patentinhaber: Flühs Drehtechnik GmbH, 58515 Lüdenscheid (DE)
(72) Erfinder: Lange, Lutz, 58511 Lüdenscheid (DE); Klawin, Tim-Florian, 58553 Halver (DE)
(74) Vertreter: Patentanwälte Dörner & Kötter PartG mbB

(56) Entgegenhaltungen:
- US-A- 5 341 845

## Beschreibung

Die Erfindung betrifft eine Mischventilkartusche, mit einem Kopfstück, das von einer Spindel mittig durchsetzt ist, über die eine Scheibensteuerung betätigbar ist, die eine Steuerscheibe umfasst, die relativ zu einer drehfest in dem Kopfstück positionierten Einlassscheibe drehbar an dieser anliegend angeordnet ist, nach dem Oberbegriff des Patentanspruchs 1. Die Erfindung betrifft weiterhin eine Armatur mit einer solchen Mischventilkartusche nach dem Patentanspruch 15.

Mit Hilfe von Mischventilkartuschen wird der Austritt von Medien aus Armaturen gesteuert. Zu diesem Zweck wird die Mischventilkartusche mittels eines Kopfstücks in das Gehäuse einer Armatur geschraubt; auf seine Spindel wird ein Drehgriff oder Hebel gesteckt. Bei bekannten Kartuschen (vgl. bspw. DE 32 07 895 C2) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, die auch als Festscheibe bezeichnet wird. Bei Drehung der Steuerscheibe gleiten die Scheiben aneinander. Dabei wird durch den Grad der Überdeckung einer in der Steuerscheibe eingebrachten Ausnehmung mit in der Einlassscheibe mündenden Heiß- und Kaltwasserkanälen die Durchflussmenge sowie der Wärmegrad von Mischwasser gesteuert.

Bei der vorbekannten Mischventilkartusche sind zur Erzielung unterschiedlicher Wassertemperaturen regelmäßig große Drehwinkel der Spindel bis zu 180° erforderlich. Je nach Länge des mit der Spindel verbundenen Bedienteils der Armatur, in welche die Mischventilkartusche eingesetzt ist, ergeben sich hierdurch große Schwenkwege, die sogar ein Umgreifen der bedienenden Hand durch den Bediener erforderlich machen können. Eine gattungsfremde Kartusche, deren Steuerscheibe mehrere Ausnehmungen aufweist, ist beispielsweise in der US 5341845A beschrieben.

Hier will die Erfindung Abhilfe schaffen. Der Erfindung liegt die Aufgabe zu Grunde, eine Mischventilkartusche bereitzustellen, die zur Erzielung der gewünschten Mischwassertemperaturen einen verminderten Drehwinkel der Spindel erfordert Gemäß der Erfindung wird diese Aufgabe durch eine Mischventilkartusche mit den Merkmalen des kennzeichnenden Teils des Patentanspruchs 1 gelöst.

Mit der Erfindung ist eine Mischventilkartusche bereitgestellt, die zur Erzielung der gewünschten Mischwassertemperaturen einen verminderten Drehwinkel der Spindel erfordert. Dadurch, dass die Kaltwasseröffnung an ihrer der Steuerscheibe zugewandten Seite eine von den zweiten Radien eines zweiten gedachten Kreissektors begrenzte Kaltwassereinlauffläche aufweist, dessen Mittelpunktswinkel (beta) kleiner ist, als der Mittelpunktswinkel (alpha) des ersten gedachten Kreissektors, ist ein Überstreichen der Kaltwassereinlauffläche durch die Ausnehmung der Steuerscheibe bei einem geringeren Drehwinkel der Steuerscheibe ermöglicht, wodurch der erforderliche Drehwinkel der Spindel zur Erzielung einer Mischwasserposition verringert ist.

Bevorzugt ist die Ausnehmung der Steuerscheibe kreissektorförmig oder kreissektorabschnittförmig ausgebildet, sie kann aber auch jedwede andere Form aufweisen, beispielsweise kann sie auch oval oder bogenförmig ausgebildet sein. Die beiden ersten Radien des ersten gedachten Kreissektors liegen jeweils bereichsweise an der Ausnehmung an.

Die Kaltwassereinlauffläche ist vorzugsweise kreissektorförmig oder kreissektorabschnittförmig ausgebildet, auch diese kann jedoch auch jedwede andere Form aufweisen. Die beiden zweiten Radien des zweiten gedachten Kreissektors liegen jeweils bereichsweise an der Kaltwassereinlauffläche an.

In Weiterbildung der Erfindung weist die Heißwasseröffnung an ihrer der Steuerscheibe zugewandten Seite eine von den dritten Radien eines dritten gedachten Kreissektors begrenzte Heißwassereinlauffläche auf, dessen Mittelpunktswinkel (gamma) größer als der Mittelpunktswinkel (beta) des gedachten zweiten Kreissektors der Kaltwassereinlauffläche ist. Hierdurch eine feinere Einstellung der Wassertemperatur ermöglicht.

Die Heißwassereinlauffläche ist vorzugsweise kreissektorförmig oder kreissektorabschnittförmig ausgebildet, auch diese kann jedoch jedwede andere Form aufweisen. Die beiden dritten Radien des dritten gedachten Kreissektors liegen jeweils bereichsweise an der Heißwassereinlauffläche an.

Der Ausdruck "gedachter Kreissektor" bezeichnet vorliegend einen Kreissektor, dessen Radien an die jeweilige Öffnung oder Einlauffläche angelegt sind. Der gedachte Kreissektor bildet so die von einem um einen zum Überfahren der Öffnung oder Einlauffläche erforderlichen Winkel gedrehten Radius überstrichene Fläche ab. Der erforderliche Winkel entspricht dem Mittelpunktswinkel des gedachten Kreissektors. Der gedachte Kreissektor ist in den Figuren gestrichelt dargestellt.

In Ausgestaltung der Erfindung ist der erforderliche Drehwinkel (delta) der Steuerscheibe von der Schließposition zur maximalen Heißwasserposition kleiner 150°, bevorzugt kleiner 140°, besonders bevorzugt kleiner 135°. Hierdurch ist eine ergonomische Bedienung der mit der Steuerscheibe verbundenen Spindel über ein mit der Spindel verbundenes Bedienteil erzielt.

In weiterer Ausgestaltung der Erfindung ist der erforderliche Drehwinkel (delta) der Steuerscheibe von der Schließposition zur maximalen Kaltwasserposition kleiner 70°, bevorzugt kleiner 60°, besonders bevorzugt kleiner 50°. Hierdurch ist ein vollständiger Kaltwasserauslauf bereits nach einer geringen Drehung der Spindel erzielt.

Die maximale Kaltwasserposition der Steuerscheibe ist der Drehwinkel der Steuerscheibe, bei dem deren Ausnehmung die Kaltwassereinlauffläche der Einlassscheibe vollständig überdeckt, wobei die Heißwassereinlauffläche vollständig verschlossen ist. Die maximale Heißwasserposition der Steuerscheibe ist der Drehwinkel der Steuerscheibe, bei dem deren Ausnehmung mit der Heißwassereinlauffläche der Einlassscheibe in Überdeckung ist, wobei die Kaltwassereinlauffläche vollständig verschlossen ist. Die Schließposition ist bei dem Drehwinkel der Steuerscheibe erzielt, bei dem deren Ausnehmung sich auf der der Heißwassereinlauffläche abgewandten Seite der Kaltwassereinlauffläche befindet und die Heißwassereinlauffläche sowie auch die Kaltwassereinlauffläche durch die Einlassscheibe vollständig verschlossen sind.

In Weiterbildung der Erfindung ist die der Steuerscheibe zugewandte Kaltwassereinlauffläche der Kaltwasseröffnung kleiner, als ihre der Steuerscheibe abgewandte Kaltwasserzulauffläche. Hierdurch ist der durch die Kaltwassereinlauffläche hindurchtretende Volumenstrom maximiert.

In Ausgestaltung der Erfindung ist die der Steuerscheibe zugewandte Heißwassereinlauffläche der Heißwasseröffnung größer, als ihre der Steuerscheibe abgewandte Heißwasserzulauffläche. Hierdurch ist der durch die Heißwassereinlauffläche hindurchtretende Volumenstrom maximiert.

In weiterer Ausgestaltung der Erfindung ist die die Kaltwasseröffnung und/oder die Heißwasseröffnung durch wenigstens eine in axialer Richtung geneigte Fläche begrenzt. Hierdurch ist eine trichterartige Öffnung erzielt, wodurch die Wasserströmung verbessert ist.

In Weiterbildung der Erfindung sind in dem Kopfstück Anschlagflächen vorhanden, an dem an der Spindel und/oder an er Steuerscheibe angeordnete Anschlagflächen anschlagbar sind, Hierdurch ist der maximale Drehwinkel der Steuerscheibe begrenzt.

In Ausgestaltung der Erfindung weist die Spindel einen radial auskragenden Ausleger auf, der an die Anschlagflächen des Kopfstücks anschlagbar ist. Bevorzugt ist in dem Kopfstück ein kreisbogenabschnittsförmiger Steg angeordnet, dessen freie Enden die Anschlagflächen aufweisen. Vorteilhaft ist der durch die Anschlagflächen des Kopfstücks begrenzte maximale Drehwinkel der Steuerscheibe auf zwischen 180° und 100°, bevorzugt zwischen 150° und 110°, besonders bevorzugt zwischen 145° und 130° begrenzt.

In weiterer Ausgestaltung der Erfindung ist der maximale Drehwinkel der Steuerscheibe um einen Überdrehwinkel größer, als der erforderliche Drehwinkel (delta) der Steuerscheibe von der Schließposition zur maximalen Heißwasserposition.

Hierdurch ist nach Erreichen der maximalen Heißwasserposition durch weiterdrehen der Spindel eine Reduzierung der Heißwassermenge ermöglicht. Der Überdrehwinkel ist dabei bevorzugt derart gewählt, dass bei Erreichen des maximalen Drehwinkels der Steuerscheibe jedenfalls ein minimaler Heißwasserstrom gewährleistet ist. Hierdurch ist die Ausbildung einer zweiten Schließposition verhindern, wodurch gewährleistet ist, dass bei Drehung der Spindel aus der Schließposition immer zunächst ein Kaltwasserstrom erfolgt.

In Weiterbildung der Erfindung ist in dem Kopfstück ein Bodenstück drehfest angeordnet, an dem die Einlassscheibe anliegt und in dem zwei Kanäle angeordnet sind, die mit jeweils einer Heiß- oder Kaltwasseröffnung fluchten und die bevorzugt jeweils mit einer Lippendichtung versehen sind, die an der Einlassscheibe anliegen. Hierdurch ist ein Anschluss der Zulaufleitungen des Ventilsitzes einer das Ventiloberteil aufnehmenden Armatur mit gerichteter Wasserzuführung zu den Heiß- und Kaltwasseröffnungen der Einlassscheibe erzielt.

In Ausgestaltung der Erfindung ist in dem Bodenstück zusätzlich ein Mischwasserauslaufkanal angeordnet. Hierdurch ist eine Leitung des Mischwasserstroms durch einen im Ventilsitz der Armatur vorhandenen Auslaufkanal ermöglicht.

Gegenstand der Erfindung ist weiterhin eine Sanitärarmatur, mit einem einen Heißwasserzulauf und einen Kaltwasserzulauf aufweisenden Ventilsitz, in dem eine Mischventilkartusche nach einem der vorgenannten Ansprüche angeordnet ist, wobei die Spindel mit einem Bedienteil verbunden ist, über das sie drehbar ist und dessen maximaler Drehwinkel begrenzt ist. Hierdurch ist eine armaturseitige Drehbegrenzung der Steuerscheibe erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

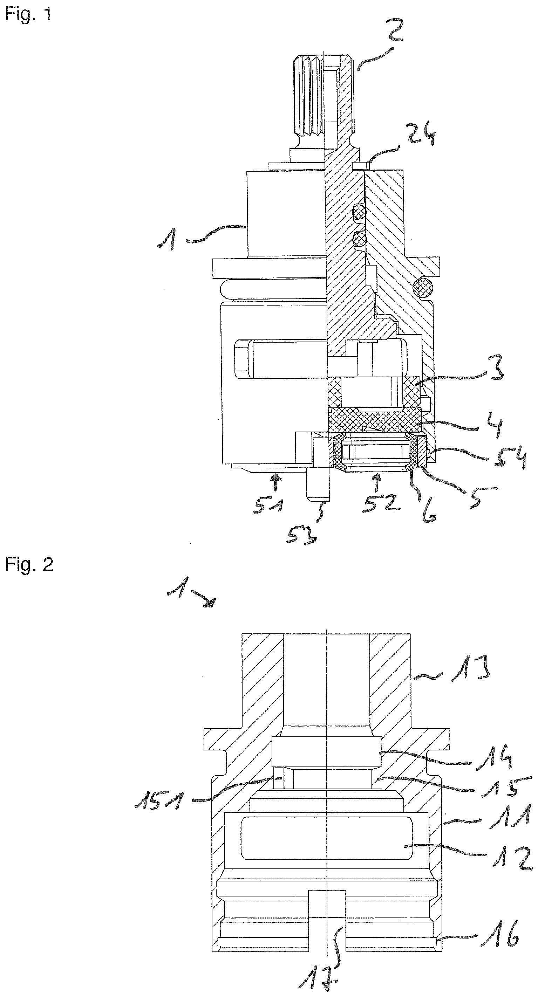

- Figur 1: die schematische Darstellung eines Ventiloberteils im Teilschnitt;
- Figur 2: die schematische Darstellung des Kopfstücks des Ventiloberteils aus Figur 1 im Längsschnitt;

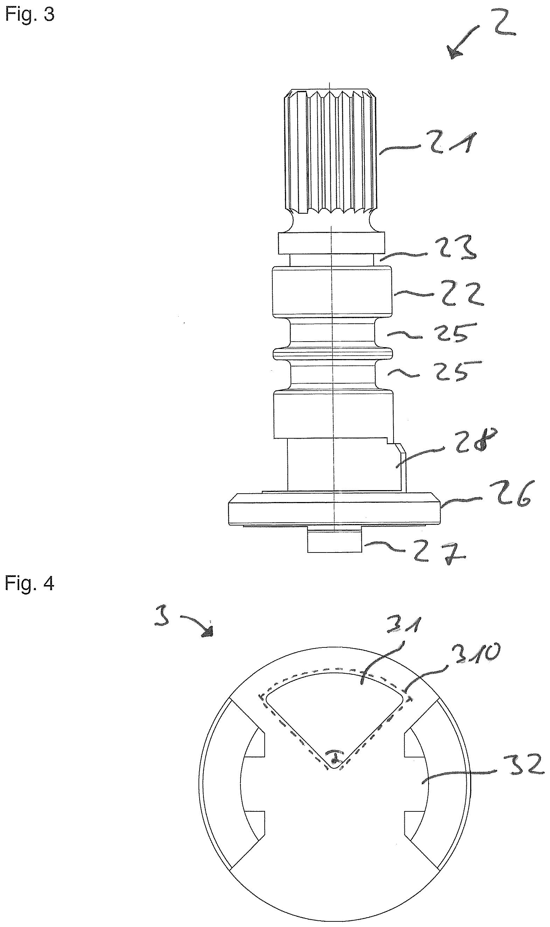

- Figur 3: die schematische Darstellung der Spindel des Ventiloberteils aus Figur 1;
- Figur 4: die Darstellung der Steuerscheibe des Ventiloberteils aus Figur 1;
- Figur 5: die Darstellung der Einlassscheibe des Ventiloberteils aus Figur 1
a) in der Draufsicht;
b) in der Ansicht von unten;
- Figur 6: die schematische Darstellung der Überdeckung von Steuerscheibe und Einlassscheibe (Scheibensteuerung) des Ventiloberteils aus Figur 1 in der Position
a) Ventil geschlossen (Position 0°);
b) Kaltwasserzulauf vollständig geöffnet (Position 30°);
c) Startposition Mischwasser (Position 40°);
d) Endposition Mischwasser (Position 110°);
e) Heißwasserzulauf vollständig geöffnet.

Die als Ausführungsbeispiel gewählte Mischventilkartusche besteht im Wesentlichen aus einem Kopfstück 1, das von einer in ihm radial geführten Spindel 2 mittig durchsetzt ist. Mit der Spindel 2 ist eine Steuerscheibe 3 formschlüssig verbunden und im Kopfstück 1 radial geführt. An ihrer der Spindel 2 abgewandten Seite der Steuerscheibe 3 ist eine Einlassscheibe 4 drehfest in dem Kopfstück 1 angeordnet, an das sich ein Bodenstück 5 anschließt. Das Bodenstück 5 ist mit Lippendichtungen 6 versehen, über die das Bodenstück 5 gegen die Einlassscheibe 4 abgedichtet ist.

Das Kopfstück 1 besteht aus einem symmetrischen Hohlkörper, dessen beide Stirnflächen offen sind. Im Ausführungsbeispiel ist das Kopfstück 1 als Messingdrehteil hergestellt. Auf seiner dem Bodenstück 5 zugewandten Seite weist das Kopfstück 1 einen hülsenartigen Teil 11 auf, in dem gegenüberliegend zwei Durchtrittsfenster 12 angeordnet sind. Endseitig ist in dem hülsenartigen Teil innen eine umlaufende Rastnut 16 zur Aufnahme von an das Bodenstück 5 angeformten Rastnasen 54 angeordnet. Weiterhin sind endseitig diametral zueinander zwei rechteckförmige Aussparungen 17 zur Aufnahme der Nasen 43 der Einlassscheibe 4 sowie des Bodenstücks 5 eingebracht.

An seinem den Durchtrittsfenstern 12 gegenüberliegenden Ende weist das Kopfstück 1 einen durchmesserreduzierten Abschnitt 13 auf, in dem innen eine umlaufende Nut 14 eingeformt ist, an die sich ein kreisbogenabschnittsförmiger Steg 15 anschließt, dessen Enden Anschlagflächen 151 ausbilden.

Die Spindel 2 ist im Wesentlichen massiv ausgeführt. Sie ist an ihrer dem Kopfstück 1 abgewandten Stirnseite außen als Außenvielkant 21 ausgeführt. Anschließend ist außen an der Spindel 2 eine Zylinderfläche 22 vorgesehen, mit der die Spindel 2 in dem Kopfstück 1 radial geführt ist. Zwischen der Zylinderfläche 22 und dem Außenvielkant 21 ist ein Einstich 23 vorgesehen, in den eine Wellensicherung 24 in Form eines Sprengrings federnd eingelegt ist. Die Wellensicherung 24 verhindert das Eindringen der Spindel 2 in das Kopfstück 1 über das vorgesehene Maß hinaus. Weiterhin sind in der Zylinderfläche 22 zwei Ringnuten 25 eingebracht, die O-Ringe aufnehmen. Auf der dem Außenvielkant 21 entgegengesetzten Seite der Spindel 2 ist eine Scheibe 26 angeformt, die auf ihrer dem Außenvielkant 21 abgewandten Seite einen Mitnehmer 27 aufweist. Auf ihrer dem Mitnehmer 27 abgewandten Seite der Scheibe 26 ist an die Spindel ein radialer Ausleger 28 zum Anschlag an die Anschlagflächen 151 des kreisbogenförmigen Steges 15 des Kopfstücks 1 angeordnet.

Die Steuerscheibe 3 ist im Wesentlichen als kreisrunde Keramikscheibe ausgebildet, in die eine kreissegmentförmige Ausnehmung 31 eingebracht ist, die von zwei ersten Radien eines ersten gedachten Kreissektors 310 begrenzt ist, der im Ausführungsbeispiel einen Mittelpunktswinkel α (alpha) von 90° aufweist. Auf ihrer der Spindel 2 zugewandten Seite weist die Steuerscheibe 3 einen quaderförmigen Eingriff 32 zur Aufnahme des Mitnehmers 27 der Spindel 2 auf.

Die Einlassscheibe 4 ist im Wesentlichen als kreisrunde Keramikscheibe ausgebildet, in die beabstandet zueinander zwei Öffnungen eingebracht sind: eine Kaltwasseröffnung 41 und eine Heißwasseröffnung 42. Die Kaltwasseröffnung 41 weist an ihrer der Steuerscheibe 3 zugewandten Seite eine von den zweiten Radien eines zweiten gedachten Kreissektors 410 begrenzte Kaltwassereinlauffläche 411 auf, die im Ausführungsbeispiel kreissektorförmig ausgebildet ist. Der zweite gedachte Kreissektor 410 weist einen Mittelpunktswinkel β (beta) von 30° auf. Die der Kaltwassereinlauffläche 411 gegenüberliegende Kaltwasserzulauffläche 412 ist größer ausgebildet als die Kaltwassereinlauffläche 411, mit der sie über eine in axialer Fläche geneigte Fläche 413 verbunden ist, welche die Kaltwasseröffnung 41 an einer Seite begrenzt.

Die Heißwasseröffnung 42 weist an ihrer der Steuerscheibe 3 zugewandten Seite eine von den dritten Radien eines dritten gedachten Kreissektors 420 begrenzte Heißwassereinlauffläche 421 auf, die im Ausführungsbeispiel kreissektorförmig ausgebildet ist. Der dritte gedachte Kreissektor 420 weist einen Mittelpunktswinkel γ (gamma) von 80° auf. Die der Heißwassereinlauffläche 421 gegenüberliegende Heißwasserzulauffläche 422 ist kleiner ausgebildet als die Heißwassereinlauffläche 421, mit der sie über eine in axialer Fläche geneigte Fläche 423 verbunden ist, welche die Heißwasseröffnung 42 an einer Seite begrenzt.

Zur drehfesten Fixierung der Einlassscheibe 4 in dem Kopfstück 1 sind an dieser weiterhin seitlich diametral zueinander zwei rechteckförmige Nasen 43 zum Eingriff in hierzu in dem Kopfstück 1 angeordnete Aussparungen 17 angeformt.

Das Bodenstück 5 ist im Wesentlichen in Form einer kreisrunden Scheibe ausgebildet. In dem Bodenstück 5 sind jeweils in Form einer Bohrung ein erster Einlasskanal 51 und ein zweiter Einlasskanal 52 eingebracht. Der erste Einlasskanal 51 fluchtet mit der Kaltwassereinlauföffnung 41, der zweite Einlasskanal mit der Heißwassereinlauföffnung 42 der Einlassscheibe 4. Die Einlasskanäle 51, 52 nehmen Lippendichtungen 6 auf, die jeweils einen Stützring 61 aufnehmen und das Bodenstück 5 gegen die Einlassscheibe 4 sowie gegen den Ventilsitz einer - nicht gezeigten - Armatur, in welche die Mischventilkartusche eingesetzt wird, abdichten.

Seitlich sind an dem Bodenstück 5 diametral zueinander zwei rechteckförmige Nasen zum Eingriff in die Aussparungen 17 des Kopfstücks 1 angeformt. Seitlich der Nasen sind weiterhin Rastnasen zum Eingriff in die Rastnut 16 des Kopfstücks 1 angeformt. Diese Rastnasen ermöglichen eine Rastverbindung zwischen dem Bodenstück 5 und dem Kopfstück 1. An seiner dem Kopfstück 1 abgewandten Unterseite ist an dem Bodenstück 5 weiterhin ein Positionierstift 53 zum Eingriff in eine mit diesem korrespondierende Positionierbohrung eine Ventilsitzes einer Armatur angeformt.

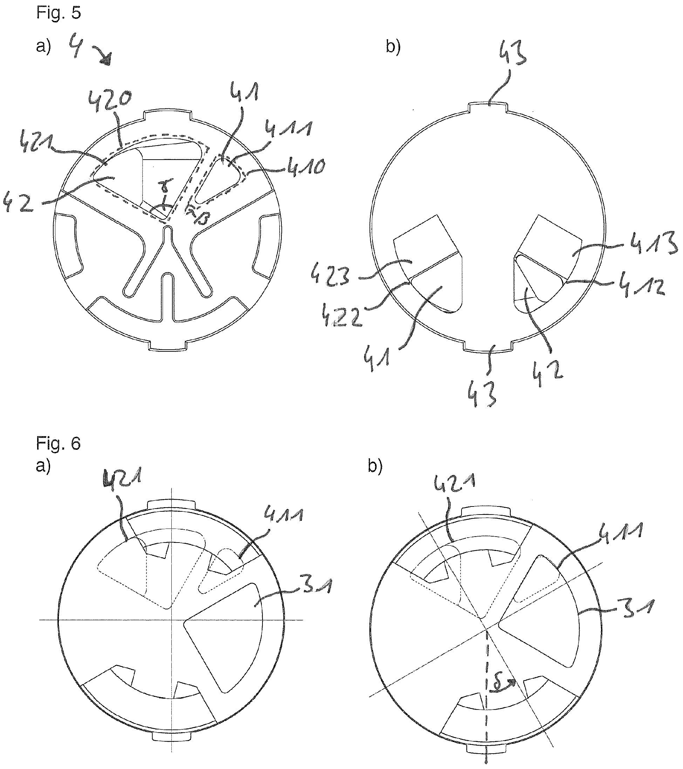

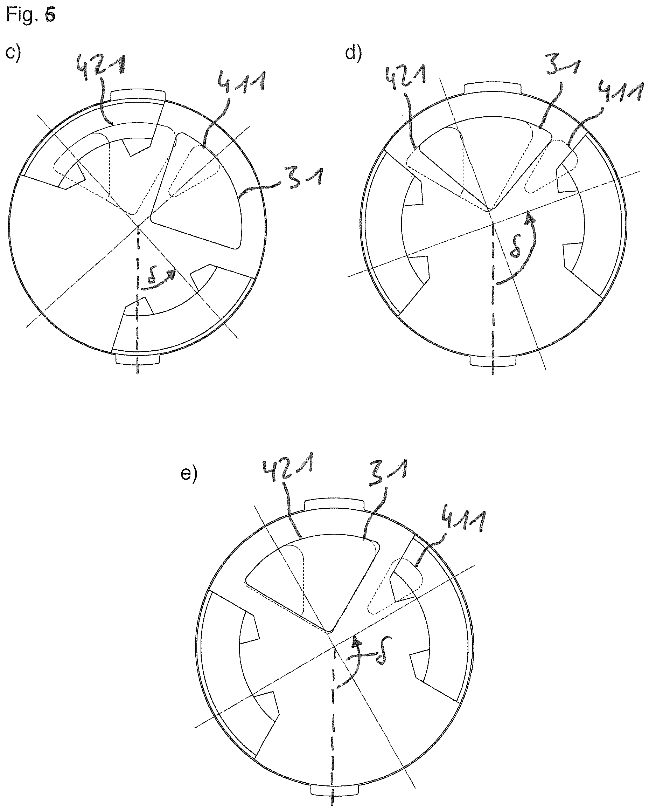

In Figur 6 sind verschiedene Stellungen der aus der über die Spindel 2 drehbaren Steuerscheibe 3 und der drehfest angeordneten Einlassscheibe 4 gebildeten Scheibensteuerung schematisch dargestellt. In der Stellung gemäß Figur 6 a) befindet sich die Steuerscheibe 3 in der Anschlagposition (Drehwinkel δ (delta) = 0°). Hier befindet sich die Ausnehmung 31 der Steuerscheibe 3 weder in Überdeckung mit der Kaltwassereinlauffläche 411 der Kaltwasseröffnung 41 noch mit der Heißwassereinlauffläche 421 der Heißwasseröffnung 42 der Einlassscheibe 4. Es findet kein Wasseraustritt statt.

In der Stellung gemäß Figur 6 b) befindet sich die Steuerscheibe 3 nach einer Drehung um einen Drehwinkel δ (delta) = 30°. Hier ist Kaltwassereinlauffläche 411 der Kaltwasseröffnung 41 von der Ausnehmung 31 der Steuerscheibe 3 vollständig überdeckt. Der Kaltwasserzulauf ist vollständig geöffnet.

In der Stellung gemäß Figur 6 c) befindet sich die Steuerscheibe 3 nach einer Drehung um einen Drehwinkel δ (delta) = 40°. Hier ist Kaltwassereinlauffläche 411 der Kaltwasseröffnung 41 weiterhin von der Ausnehmung 31 der Steuerscheibe 3 vollständig überdeckt, wobei diese zusätzlich auch die Heißwassereinlauffläche 421 der Heißwasseröffnung 42 geringfügig überdeckt. Der Kaltwasserzulauf ist vollständig geöffnet, die Mischwasser-Startposition der Steuerscheibe 3 ist erreicht.

In der Stellung gemäß Figur 6 d) befindet sich die Steuerscheibe 3 nach einer Drehung um einen Drehwinkel δ (delta) = 110°. Hier ist die Heißwassereinlauffläche 421 der Heißwasseröffnung 42 von der Ausnehmung 31 der Steuerscheibe 3 bereichsweise überdeckt, wobei der Kaltwassereinlauffläche 411 der Kaltwasseröffnung 41 nicht mehr überdeckt wird. Der Heißwasserzulauf ist bereichsweise geöffnet, der Kaltwasserzulauf ist geschlossen.

In der Stellung gemäß Figur 6 e) befindet sich die Steuerscheibe 3 nach einer Drehung um einen Drehwinkel δ (delta) = 130°, der im Ausführungsbeispiel den maximalen Drehwinkel (Anschlagdrehposition der Spindel 2) darstellt. Hier ist die Heißwassereinlauffläche 421 der Heißwasseröffnung 42 von der Ausnehmung 31 der Steuerscheibe 3 vollständig überdeckt. Der Heißwasserzulauf ist vollständig geöffnet.

## Patentansprüche

1. Mischventilkartusche, mit einem Kopfstück (1), das von einer Spindel (2) mittig durchsetzt ist, über die eine Scheibensteuerung betätigbar ist, die eine Steuerscheibe (3) umfasst, die relativ zu einer drehfest in dem Kopfstück (1) positionierten Einlassscheibe (4) drehbar an dieser anliegend angeordnet ist, wobei die Einlassscheibe (4) eine Heißwasseröffnung (42) und eine Kaltwasseröffnung (41) aufweist, **dadurch gekennzeichnet, dass** die Steuerscheibe (3) an ihrer der Einlassscheibe zugewandten Seite genau eine Ausnehmung (31) aufweist, dass diese Ausnehmung von den ersten Radien eines ersten gedachten Kreissektors (310) begrenzt ist und zur Einstellung des Mischwassers mit der Heißwasseröffnung (42) und der Kaltwasseröffnung (41) in zumindest bereichsweise Überdeckung bringbar ist, und dass die Kaltwasseröffnung (41) an ihrer der Steuerscheibe (3) zugewandten Seite eine von den zweiten Radien eines zweiten gedachten Kreissektors (410) begrenzte Kaltwassereinlauffläche (411) aufweist, dessen Mittelpunktswinkel β (beta) kleiner ist, als der Mittelpunktswinkel α (alpha) des ersten gedachten Kreissektors.

2. Mischventilkartusche nach Anspruch 1, **dadurch gekennzeichnet, dass** die Heißwasseröffnung (42) an ihrer der Steuerscheibe (3) zugewandten Seite eine von den dritten Radien eines dritten gedachten Kreissektors (420) begrenzte Heißwassereinlauffläche (421) aufweist, dessen Mittelpunktswinkel γ (gamma) größer als der Mittelpunktswinkel β (beta) des zweiten gedachten Kreissektors (410) der Kaltwassereinlauffläche (411) ist.

3. Mischventilkartusche nach Anspruch 1 oder 2, **dadurch gekennzeichnet, dass** der erforderliche Drehwinkel δ (delta) der Steuerscheibe (3) von der Schließposition zur maximalen Heißwasserposition kleiner 150 °, bevorzugt kleiner 140°, besonders bevorzugt kleiner 135° ist.

4. Mischventilkartusche nach einem der vorgenannten Ansprüche, **dadurch gekennzeichnet, dass** der erforderliche Drehwinkel δ (delta) der Steuerscheibe (3) von der Schließposition zur maximalen Kaltwasserposition kleiner 70°, bevorzugt kleiner 60°, besonders bevorzugt kleiner 50° ist.

5. Mischventilkartusche nach einem der vorgenannten Ansprüche, **dadurch gekennzeichnet, dass** die der Steuerscheibe (3) zugewandte Kaltwassereinlauffläche (411) der Kaltwasseröffnung (41) kleiner ist, als ihre der Steuerscheibe (3) abgewandte Kaltwasserzulauffläche (412).

6. Mischventilkartusche nach der vorgenannten Ansprüche, **dadurch gekennzeichnet, dass** die der Steuerscheibe (3) zugewandte Heißwassereinlauffläche (421) der Heißwasseröffnung (42) größer ist, als ihre der Steuerscheibe (3) abgewandte Heißwasserzulauffläche (422).

7. Mischventilkartusche nach einem der vorgenannten Ansprüche, **dadurch gekennzeichnet, dass** die die Kaltwasseröffnung (41) und/oder die Heißwasseröffnung (42) durch wenigstens eine in axialer Richtung geneigte Fläche (413, 421) begrenzt ist.

8. Mischventilkartusche nach einem der vorgenannten Ansprüche, **dadurch gekennzeichnet, dass** in dem Kopfstück (1) Anschlagflächen vorhanden sind, an dem an der Spindel (2) und/oder an der Steuerscheibe (3) angeordnete Anschlagflächen anschlagbar sind.

9. Mischventilkartusche nach Anspruch 8, **dadurch gekennzeichnet, dass** die Spindel (2) einen radial auskragenden Ausleger (28) aufweist, der an die Anschlagflächen des Kopfstück (1) anschlagbar ist.

10. Mischventilkartusche nach Anspruch 8 oder 9, **dadurch gekennzeichnet, dass** in dem Kopfstück (1) ein kreisbogenabschnittsförmiger Steg (15) angeordnet ist, dessen freie Enden die Anschlagflächen aufweisen.

11. Mischventilkartusche nach einem der Ansprüche 8 bis 10, **dadurch gekennzeichnet, dass** der durch die Anschlagflächen des Kopfstücks (1) begrenzte maximale Drehwinkel δ (delta) der Steuerscheibe (3) auf zwischen 180° und 100°, bevorzugt zwischen 150° und 110°, besonders bevorzugt zwischen 145° und 130° begrenzt ist.

12. Mischventilkartusche nach Anspruch 11, **dadurch gekennzeichnet, dass** der maximale Drehwinkel δ (delta) der Steuerscheibe (3) um einen Überdrehwinkel größer ist, als der erforderliche Drehwinkel δ (delta) der Steuerscheibe von der Schließposition zur maximalen Heißwasserposition.

13. Mischventilkartusche nach einem der vorgenannten Ansprüche, **dadurch gekennzeichnet, dass** in dem Kopfstück (1) ein Bodenstück (5) drehfest angeordnet ist, an dem die Einlassscheibe (4) anliegt und in dem zwei Kanäle (51, 52) angeordnet sind, die mit jeweils einer Heiß- oder Kaltwasseröffnung (42, 41) fluchten und die bevorzugt jeweils mit einer Lippendichtung (6) versehen sind, die an der Einlassscheibe (4) anliegen.

14. Mischventilkartusche nach Anspruch 13, **dadurch gekennzeichnet, dass** in dem Bodenstück (5) zusätzlich ein Mischwasserauslaufkanal angeordnet ist.

15. Sanitärarmatur, mit einem einen Heißwasserzulauf und einen Kaltwasserzulauf aufweisenden Ventilsitz, in dem eine Mischventilkartusche nach einem der vorgenannten Ansprüche angeordnet ist, wobei die Spindel (2) mit einem Bedienteil verbunden ist, über das sie drehbar ist und dessen maximaler Drehwinkel begrenzt ist.

## Claims

1. Mixing valve cartridge, with a head piece (1) that is centrally penetrated by a spindle (2) by means of which a disc control can be actuated, comprising a control disc (3) that is arranged rotatably relative to and in contact with an inlet disc (4) positioned non-rotatably in the head piece (1), where the inlet disc (4) has a hot-water opening (42) and a cold-water opening (41), **characterised in that** the control disc (3) has precisely one recess (31) on its side facing the inlet disc, that this recess is delimited by the first radii of a first imagined circle segment (310) and can be brought to overlap the hot-water opening (42) and the cold-water opening (41) at least in an area to adjust the mixed water, and that the cold-water opening (41) has a cold-water inlet area (411) delimited by the second radii of a second imagined circle segment (410) on its side facing the control disc (3), the centre angle ß (beta) of which is smaller than the centre angle α (alpha) of the first imagined circle segment.

2. Mixing valve cartridge according to claim 1, **characterised in that** the hot-water opening (42) has a hot-water inlet area (421) delimited by the third radii of a third imagined circle segment (420) on its side facing the control disc (3), the centre angle γ (gamma) of which is larger than the centre angle β (beta) of the second imagined circle segment (410) of the cold-water inlet area (411).

3. Mixing valve cartridge according to claim 1 or 2, **characterised in that** the required rotation angle δ (delta) of the control disc (3) from the closed position to the maximal hot-water position is less than 150°, preferably less than 140°, particularly preferably less than 135°.

4. Mixing valve cartridge according to one of the preceding claims, **characterised in that** the required rotation angle δ (delta) of the control disc (3) from the closed position to the maximal cold-water position is less than 70°, preferably less than 60°, particularly preferably less than 50°.

5. Mixing valve cartridge according to one of the preceding claims, **characterised in that** the cold-water inlet area (411) of the cold-water opening (41) that faces the control disc (3) is smaller than its cold-water feed area (412) that faces away from the control disc (3).

6. Mixing valve cartridge according to one of the preceding claims, **characterised in that** the hot-water inlet area (421) of the hot-water opening (42) that faces the control disc (3) is larger than its hot-water feed area (422) that faces away from the control disc (3).

7. Mixing valve cartridge according to one of the preceding claims, **characterised in that** the cold-water opening (41) and/or the hot-water opening (42) is/are delimited by at least one area (413, 421) that is inclined in the axial direction.

8. Mixing valve cartridge according to one of the preceding claims, **characterised in that** the head piece (1) has stop surfaces on which stop surfaces arranged on the spindle (2) and/or on the control disc (3) can stop.

9. Mixing valve cartridge according to claim 8, **characterised in that** the spindle (2) has a radially protruding cantilever (28) that can stop on the stop surfaces of the head piece (1).

10. Mixing valve cartridge according to claim 8 or 9, **characterised in that** a web (15) in the shape of an arc section, the free ends of which have the stop surfaces, is arranged in the head piece (1).

11. Mixing valve cartridge in accordance with any one of the claims 8 to 10, **characterised in that** the maximal rotation angle δ (delta) of the control disc (3) that is limited by the stop surfaces of the head piece (1) is limited to between 180° and 100°, preferably between 150° and 110°, particularly preferably between 145° and 130°.

12. Mixing valve cartridge according to claim 11, **characterised in that** the maximal rotation angle δ (delta) of the control disc (3) is larger than the required rotation angle δ (delta) of the control disc from the closed position to the maximal hot-water position by an overtwist angle.

13. Mixing valve cartridge according to one of the preceding claims, **characterised in that** a bottom piece (5) is arranged non-rotatably in the head piece (1) with which bottom piece the inlet disc (4) is in contact and in which two channels (51, 52) are arranged that align with one hot- or cold-water opening (42, 41) each and that are each preferably provided with a lip seal (6) that is in contact with the inlet disc (4).

14. Mixing valve cartridge according to claim 13, **characterised in that** a mixed-water outlet channel is additionally arranged in the bottom piece (5).

15. Sanitary fitting with a valve seat that has a hot-water feed and a cold-water feed in which a mixing valve cartridge in accordance with one of the preceding claims is arranged, where the spindle (2) is connected to an operating part by means of which it can be rotated and the maximal rotation angle of which is limited.

## Revendications

1. Cartouche de robinet mitigeur, avec une pièce têtière (1) traversée en son centre par une broche (2) via laquelle une commande de disque est actionnable, qui comprend un disque de commande (3), lequel est disposé - relativement à un disque d'admission (4) positionné dans la pièce têtière (1) sans pouvoir tourner - en applique contre ce disque et capable de tourner, sachant que le disque d'admission (4) présente un orifice pour l'eau chaude (42) et un orifice pour l'eau froide (41), **caractérisée en ce qu'**un disque de commande (3) présente exactement un évidement (31) sur son côté regardant le disque d'admission, que cet évidement est limité par les premiers rayons d'un premier secteur circulaire (310) abstrait, et que pour régler l'eau à mitiger il est possible de l'amener en superposition au moins locale avec l'orifice pour l'eau chaude (42) et l'orifice pour l'eau froide (41), et que l'orifice pour l'eau froide (41) présente, sur son côté regardant le disque de commande (3), une surface d'admission d'eau froide (411) délimitée par les deuxièmes rayons d'un deuxième secteur circulaire (410) abstrait, dont l'angle au centre β (bêta) est plus petit que l'angle au centre α (alpha) du premier secteur circulaire abstrait.

2. Cartouche de robinet mitigeur selon la revendication 1, **caractérisée en ce que** l'orifice pour l'eau chaude (42) présente, sur son côté regardant le disque de commande (3), une surface d'admission d'eau chaude (421) délimitée par les troisièmes rayons d'un troisième secteur circulaire abstrait (420), dont l'angle au centre γ (gamma) est plus grand que l'angle au centre β (bêta) du deuxième secteur circulaire (410) abstrait de la surface d'admission d'eau froide (411).

3. Cartouche de robinet mitigeur selon la revendication 1 ou 2, **caractérisée en ce que** l'angle de rotation δ (delta) nécessaire du disque de commande (3) est, entre la position de fermeture et la position maximale d'eau chaude, inférieur à 150°, de préférence inférieur à 140° et de façon particulièrement préférentielle inférieur à 135°.

4. Cartouche de robinet mitigeur selon l'une des revendications précédentes, **caractérisée en ce que** l'angle de rotation δ (delta) nécessaire du disque de commande (3) est, entre la position de fermeture et la position maximale d'eau chaude, inférieur à 70°, de préférence inférieur à 60° et de façon particulièrement préférentielle inférieur à 50°.

5. Cartouche de robinet mitigeur selon l'une des revendications précédentes, **caractérisée en ce que** la surface d'admission de l'eau froide (411) - regardant le disque de commande (3) - de l'orifice pour l'eau froide (41) est plus petite que sa surface d'arrivée d'eau froide (412) ne regardant pas le disque de commande (3).

6. Cartouche de robinet mitigeur selon l'une des revendications précédentes, **caractérisée en ce que** la surface d'admission de l'eau chaude (421) - regardant le disque de commande (3) - de l'orifice pour l'eau chaude (42) est plus grande que sa surface d'arrivée d'eau chaude (422) ne regardant pas le disque de commande (3).

7. Cartouche de robinet mitigeur selon l'une des revendications précédentes, **caractérisée en ce que** l'orifice pour l'eau froide (41) et/ou l'orifice pour l'eau chaude (42) est/sont limité(s) par au moins une surface (413, 421) inclinée en direction axiale.

8. Cartouche de robinet mitigeur selon l'une des revendications précédentes, **caractérisée en ce que** dans la pièce têtière (1) sont présentes des surfaces butées contre lesquelles des surfaces butées disposées contre la broche (2) et/ou contre le disque de commande (3) peuvent venir buter.

9. Cartouche de robinet mitigeur selon la revendication 8, **caractérisée en ce que** la broche (2) présente un bras (28) radialement en porte-à-faux qui peut venir buter contre les surfaces butées de la pièce têtière (1).

10. Cartouche de robinet mitigeur selon la revendication 8 ou 9, **caractérisée en ce que** dans la pièce têtière (1) est disposée une nervure (15) en forme de segment en arc de cercle dont les extrémités libres présentent les surfaces butées.

11. Cartouche de robinet mitigeur selon l'une des revendications 8 à 10, **caractérisée en ce que** l'angle de rotation maximal δ (delta) - limité par les surfaces butées de la pièce têtière (1) - du disque de commande (3) est limité entre 180° et 100°, de préférence entre 150° et 110°, de manière particulièrement préférentielle entre 145° et 130°.

12. Cartouche de robinet mitigeur selon la revendication 11, **caractérisée en ce que** l'angle de rotation maximal δ (delta) du disque de commande (3) est supérieur d'un angle de sur-rotation à l'angle de rotation δ (delta) nécessaire du disque de commande entre la position de fermeture et la position maximale pour l'eau chaude.

13. Cartouche de robinet mitigeur selon l'une des revendications précédentes, **caractérisée en ce que** dans la pièce têtière (1) est disposée sans pouvoir tourner une pièce de fond (5) contre laquelle applique le disque d'admission (4) et dans laquelle sont disposés deux conduits (51, 52), qui sont respectivement dans l'alignement d'un orifice pour l'eau chaude ou pour l'eau froide (42, 41) et qui sont de préférence munis d'un joint à lèvres (6) qui applique contre le disque d'admission (4).

14. Cartouche de robinet mitigeur selon la revendication 13, **caractérisée en ce que** dans la pièce de fond (5) est disposée en plus un conduit d'écoulement d'eau mitigée.

15. Robinetterie sanitaire avec un siège de robinet présentant une arrivée d'eau chaude et une arrivée d'eau froide, siège dans lequel est disposée une cartouche de robinet mitigeur selon l'une des revendications précédentes, sachant que la broche (2) est reliée avec un organe de commande via lequel elle peut tourner, et dont l'angle de rotation maximal est limité.
